# EUROPEAN PATENT SPECIFICATION

(11) **EP 2 337 729 B1**
(45) Date of publication and mention of the grant of the patent: **07.05.2014**
(21) Application number: 08875924.6
(22) Date of filing: 17.09.2008
(51) Int. Cl.: B62D 33/06, F16F 1/38, F16F 1/54, B60G 11/22, B60G 99/00

(54) **CAB SUSPENSION UNIT AND VEHICLE COMPRISING AT LEAST TWO SUCH CAB SUSPENSION UNITS**
.
UNITÉ DE SUSPENSION DE CABINE ET VÉHICULE COMPRENANT AU MOINS DEUX DE CES UNITÉS DE SUSPENSION DE CABINE

(43) Date of publication of application: 29.06.2011
(73) Proprietor: Renault Trucks, 69800 Saint Priest (FR)
(72) Inventor: MOSCICKI, Christian, F-38790 Charantonnay (FR)
(74) Representative: Putet, Gilles
(86) International application number: PCT/IB2008/055616
(87) International publication number: WO 2010/032090

(56) References cited:
- FR-A- 2 504 069
- FR-A- 2 791 002
- JP-A- 5 104 922
- US-A- 3 386 264
- US-A- 5 026 090
- US-A- 5 967 597

## Description

### TECHNICAL FIELD OF THE INVENTION

The present invention relates to a cab suspension unit, for a vehicle having a chassis supporting a cab. The present invention also relates to a vehicle having a chassis supporting a cab and comprising at least two such cab suspension units.

### BACKGROUND OF THE INVENTION

Prior art vehicles which have a chassis supporting a cab, in particular prior art trucks, usually comprise one or more cab suspension units. Such cab suspension units are arranged between the cab and the chassis, at a rearward location and/or a forward location of the cab with respect to the direction of travel of the vehicle.

US-A-5 967 597, which shows the preamble of claim 1, describes a cab suspension unit, for a vehicle having a chassis supporting a cab, comprising a rotating part and a static part, with respect to said cab. On one hand, the static part, i.e. the torsion bar that is static with respect to the cab, has means for connection to the cab, by way of two levers. On the other hand, the rotating part, i.e. the square housing that rotates with respect to the cab, has means for connection to the chassis.

The rotating part is able to rotate around a horizontal axis, which extends along the transverse direction of the cab. A single elastomeric component extends in the whole volume between the rotating part and the static part. This elastomeric component is secured to the respective surfaces of the rotating part and of the static part. The elastomeric component is hence submitted to a shearing torsion, combined with tension in the higher areas and with compression in the lower areas. Shearing induced by torsion, combined with tension, tends to shorten the service life of the elastomeric component, hence of the cab suspension unit. Furthermore, due to the structure of this cab suspension unit, the elastomeric component has a quite linear stiffness, thus requiring pretty large dimensions of the cab suspension units in order to cope with the maximal possible displacement or stroke of the cab, which is around ±50 mm.

Besides, the stiffness along the vertical direction cannot be adjusted, because the elastomeric component is unitary. As a consequence, the damping of the vertical oscillations of the cab in both directions is relatively limited. Moreover, there is only one cab suspension unit for the whole width of the cab. This cab suspension unit is therefore quite wide along a transverse direction.

### SUMMARY OF THE INVENTION

One object of the present invention is to provide a cab suspension unit having a non linear stiffness, adapted to large displacements of the cab, with long service life components, relatively small overall dimensions and good anti-rolling properties.

This object is achieved by the cab suspension unit of claim 1.

According to other advantageous but optional features of the present invention, considered on their own or in any technical possible combination:
- said or every first component has elastic properties and in that said or every first component is attached to said rotating part and to said static part;
- the cab suspension unit comprises two second elastic components, said second elastic components being located and oriented generally symmetrically with respect to said horizontal axis;
- the cab suspension unit has two third elastic components located and oriented symmetrically with respect to said horizontal axis;
- said second and third elastic components are distinct components;
- said second and third elastic components are selected so that the stiffness of said cab suspension unit is, on one hand, low for small displacements of said cab with respect to said chassis and, on the other hand, high for large displacements of said cab with respect to said chassis;
- one of said rotating and static parts defines an external part and the other one of said rotating and static parts defines an internal part, said external part generally enclosing said internal part;
- said rotating part and said static part respectively have means for connexion to said chassis and to said cab, and said rotating part and said static part respectively define the internal part and the external part;
- said or every first component is located vertically above said horizontal axis;
- said or every first component is located vertically under said horizontal axis;
- said or every second elastic component cooperates with said rotating part and with said static part along respective planar surfaces, said planar surfaces being substantially parallel for at least one relative position in operation of said static part and of said rotating part;
- said rotating part has auxiliary planar surfaces arranged to cooperate with said third elastic components, said auxiliary planar surfaces being generally parallel to each other;
- said or every third elastic component is attached to only one of said rotating and static parts;
- said second and third elastic components are made of elastomeric material, for example rubber; and
- one of said rotating part and said static part is connected to said chassis by means of a lever, said lever being articulated to said chassis.

Another object of the present invention is to provide a vehicle with an improved comfort for its passengers, with a variable stiffness for damping the oscillations along the vertical displacement of the cab and with a good anti-rolling behavior.

This object is achieved by a vehicle having a chassis supporting a cab, characterized in that it comprises at least two cab suspension units according to any preceding claim, said suspensions being respectively located on the right side and on the left side of said vehicle.

### BRIEF DESCRIPTION OF THE DRAWINGS

The present invention and its advantages will be well understood on the basis of the following description, which is given as an illustrative example, without restricting the scope of the invention, in relation with the annexed drawings, among which:
- figure 1 is a schematic side view in a first position of a first embodiment of a cab suspension unit according to the invention, which is mounted on a vehicle according to the invention,
- figure 2 is a view analogous to figure 1 of the cab suspension unit of figure 1 in a second position,
- figure 3 is a view analogous to figure 1 of the cab suspension unit of figure 1 in a third position,
- figure 4 is a chart illustrating the vertical load induced by the cab on a cab suspension unit according to the invention, versus the vertical displacement of the cab,
- figure 5 is a view, on a smaller scale, illustrating the cab suspension unit of figure 1 in an intermediate step during its manufacturing process; and
- figure 6 is a perspective view of a cab suspension unit according to a second embodiment of the present invention,
- figure 7 is an exploded perspective view of the cab suspension unit of figure 6,
- figure 8 is a view, on a smaller scale, of a third embodiment of a cab suspension unit according to the invention, and
- figure 9 is a view of a cab suspension unit according to a fourth embodiment of the invention, in a position similar to the position of figure 1.

### DETAILED DESCRIPTION OF SOME EMBODIMENTS

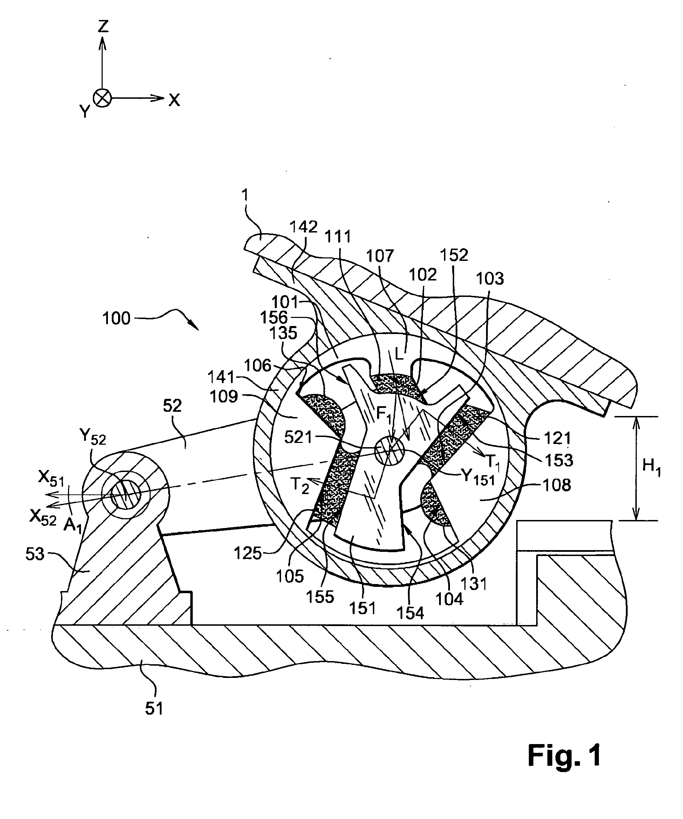

Figure 1 illustrates a cab suspension unit 100, which is arranged between a cab 1 and a chassis 51 of a vehicle according to the present invention, like a truck. Cab suspension unit 100 comprises a rotating part 151 and a static part 101. Rotating part 151 is called "rotating" because it can rotate with respect to static part 101 and to cab 1 around an axis Y₁₅₁, whereas static part 101 is called "static" because it does not move with respect to cab 1. This rotational movement of the rotating part 151 is due to the vertical movements of the cab 1 relative to the chassis 51, hence to the unevenness of the road on which the vehicle drives. The rotational amplitude of rotating part 151 around axis Y₁₅₁ is limited to less than 30°. In other words, rotating part 151 can rotate relative to static part 101 with limited amplitude.

This rotational movement of the rotating 151 and static 101 parts is due to the suspension being designed as a levered suspension. The rotating part 151 is secured to a shaft 521 located at one end of a lever 52. The shaft 521 extends along axis Y₁₅₁. Axis Y₁₅₁ is said to be "generally" horizontal, because it might be slightly inclined or sloping with respect to a horizontal direction. Lever 52 has a generally straight shape extending in a longitudinal and vertical plane and it is pivotally connected by its second end to a bracket 53, so as to rotate around an axis Y₅₂ parallel to the Y axis. Bracket 53 is secured to chassis 51. Lever 52 is thus articulated to the chassis 51. Hence, the shaft 521, the lever 52 and the bracket 53 constitute means for connection of the rotating part 151 to the chassis 51. Lever 52 is inclined towards the bottom and the front of cab 1. In other words, axis Y₅₂ of lever 52 stands slightly forward and under axis Y₁₅₁, so as to counteract the longitudinal forces resulting from the acceleration or deceleration of the vehicle.

Cab suspension unit 100 is designed to be mounted under the forward area of cab 1, in order to permit a relative vertical movement between cab 1 and chassis 51. The ascending vertical direction is illustrated at figure 1 by an axis Z of an XYZ reference frame. The X axis represents the forward direction of travel of the vehicle. The Y axis represents the transverse direction of the vehicle. Both axes X and Y are generally horizontal when the vehicle stands on a horizontal surface. Length, width and height are defined along the respective axes X, Y and Z. The forward end of the cab 1 is pivotally secured to the chassis 51, so that the cab 1 may pivot around axis Y₅₂. There is one cab suspension unit 100 on each side, right and left, of the forward end of cab 1. Alternatively, there could be four cab suspension units, one on each corner of the cab, i.e. on each side and on each end, forward and rearward.

In this first embodiment, the static part 101 generally has the shape of a tube with a central hollow into it and with an outer surface in the form of a circular basis cylinder. The external surface of the static part 101 is rigidly secured to a static frame 141 by any known means, for instance by welding, by bonding or by a key. The static frame 141 comprises a tube enclosing the static part 101 and a securing plate 142, the latter being secured to cab 1 by any known means, for instance by rivets, by welding or by bolts. The static frame 141 with its securing plate 142 thus forms a means for connection of the static part 101 to the cab 1.

A vehicle according to the present invention, comprises at least two cab suspension units of the kind of cab suspension unit 100, in order to have its chassis 51 supporting its cab 1. In one embodiment, a first cab suspension unit is located on the right side and in the forward region of the cab 1, whereas the other cab suspension unit is located on the left side and in the forward region of cab 1. These two cab suspension units 1 both works to resiliently and flexibly support the cab 1 over the chassis 51.

The overall width of cab suspension unit 1, considered along the transverse direction represented by axis Y₁₅₁, lies between 50 mm and 150 mm. In any case, it is preferably smaller than 110 mm. Cab suspension unit 1 is therefore quite compact. Besides, the use of two parallel cab suspension units 1 allows the rolling motions of the cab 1, yet offering a good filtration or dampening of these motions.

In this embodiment, the rotating part 151 has the general shape of a "Y", with two relatively thin upper arms and a relatively thick foot. This relatively complex shape is determined by the functions that the rotating part 151 is intended to perform and that will be described hereafter. The rotating part 151 is fully enclosed within the static part 101. Therefore, the rotating part 151 forms an internal part of the cab suspension unit 100, whereas the static part 101 forms an external part of cab suspension unit 100.

Cab suspension unit 100 further comprises a first component 111, two second components 121 and 125 and two third components 131 and 135. All components herein have elastic properties which are approximately isotropic, hence in particular under compression. In this embodiment, first, second and third elastic components 111, 121, 125, 131 and 135 are distinct, i.e. not unitary and they are herein made of elastomeric material, like rubber, so that they can deform resiliently when submitted to mechanical loads. Alternatively, first and second elastic components can be made unitary, so as to form one integral component. However, second and third elastic components are distinct components.

First elastic component 111 is arranged between rotating part 151 and static part 101. More specifically, the first elastic component 111 has the general shape of a parallelepiped. In the first embodiment illustrated on figure 1, the first elastic component 111 is located vertically above axis Y₁₅₁, with reference to the ascending Z axis.

Its upper and lower surfaces respectively adhere to corresponding surfaces 102 and 152 belonging respectively to the static part 101 and to the rotating part 151. Both adhering surfaces 102 and 152 have the shape of a sector of a cylinder and they are approximately parallel to each other. Adhering surface 102 is defined by a stud 107 rigidly protruding from static part 101 towards axis Y₁₅₁. Adhering surface 152 is defined, at the top of rotating part 151, by a surface extending between the upper arms of rotating part 151.

The first elastic component 111 can transmit a force, illustrated by a vector F₁, mainly vertical and resulting from the load L induced by cab 1 on rotating part 151. Indeed, the first elastic component 111 extends along a direction which is approximately vertical, i.e. parallel to the Z axis, and radial, i.e. secant to axis Y₁₅₁. In other words, the first elastic component 111 is arranged vertically above the shaft 521. Furthermore, adhering surfaces 102 and 152 are both generally parallel to axis Y₁₅₁. The first elastic component 111 thus transfers mainly the force F₁, from the stud 107 to the shaft 521 and, further, to the lever 52. When it is secured to surfaces 102 and 152, the first elastic component 111 is preferably stiff in compression along vertical axis Y, but rather soft in the shearing direction, i.e. along axis X or Y.

Both second elastic components 121 and 125 are arranged between rotating part 151 and static part 101. Like the first elastic component 111, both second elastic components 121 and 125 have the shapes of parallelepipeds As can be seen on figure 1, the second elastic components 121 and 125 are located and oriented generally symmetrically with respect to axis Y₁₅₁. Indeed, second element 121 is located above and on the right of axis Y₁₅₁, whereas second element 125 is located under and on the left of axis Y₁₅₁. Second elastic components 121 and 125 may be secured on one or both of rotating part 151 and static part 101. They may be secured by adhesion or by any equivalent means. As will be seen hereafter, the second components will be essentially stressed in compression between the rotating and static parts, so that it suffices that these components be secured to only one of these parts.

One face of second elastic component 121 cooperates with a planar surface 103 belonging to static part 101, while the opposite face of second elastic component 121 cooperates with a planar surface 153 belonging to rotating part 151. On the same way, opposite faces of second elastic component 125 respectively cooperate with a planar surface 105 of static part 101 and with a planar surface 155 of rotating part 151.

Due to their respective shapes and locations, second elastic components 121 and 125 will be stressed mostly in compression. Due to its arrangement, every second elastic component 121 or 125 is able to transmit, around axis Y₁₅₁, forces hereafter named T₁ and T₂ or T₃ and T₄, mainly resulting from the load induced by the static part 101 on the rotating part 151. Forces T₁ and T₂ or T₃ and T₄ generate torques which limit or hamper the rotation of the rotating part 151. Every second elastic component 121 or 125 is hence arranged to dampen the rotating movement of the rotating part 151 when the latter turns clockwise about its positions illustrated on the attached figures 1 to 3.

Besides, the two third elastic components 131 and 135 are arranged between the rotating part 151 and the static part 101. Third elastic components 131 and 135 are in the shape of halves of cylinders, although they could be in the shape of halves of spheres, parallelepiped etc. The third elastic component 135 is located and oriented generally symmetrically, with respect to axis Y₁₅₁, to the third elastic component 131. As can be seen on figure 1, third component 131 is oriented leftwards and downwards, whereas third elastic component 135 is rather oriented rightwards and upwards.

Third elastic component 131 is secured by gluing to a planar surface 104 defined by a salient triangle 108 which belongs to the static part 101. On the same way, elastic component 135 is secured to a planar surface 106 defined by a salient triangle 109 which belongs to the static part 101. Unlike the first and second elastic components 111, 121 and 125, third elastic components 131 and 135 are not secured to rotating part 151. Hence, every third elastic component 131 or 135 is only attached to the static part 101. Alternatively, third elastic components 131 and 135 can be secured to the static part 101 by any other equivalent means.

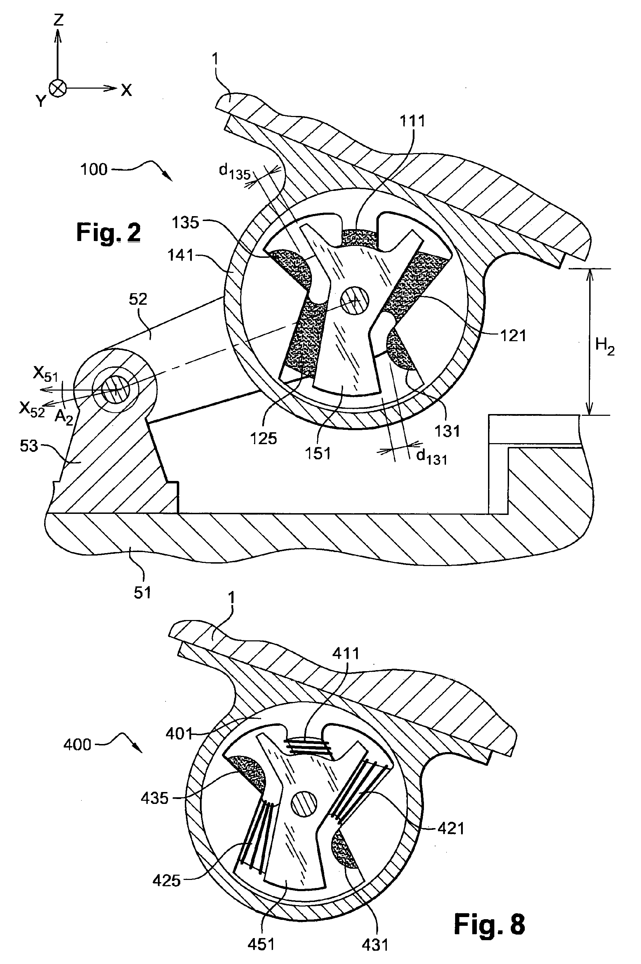

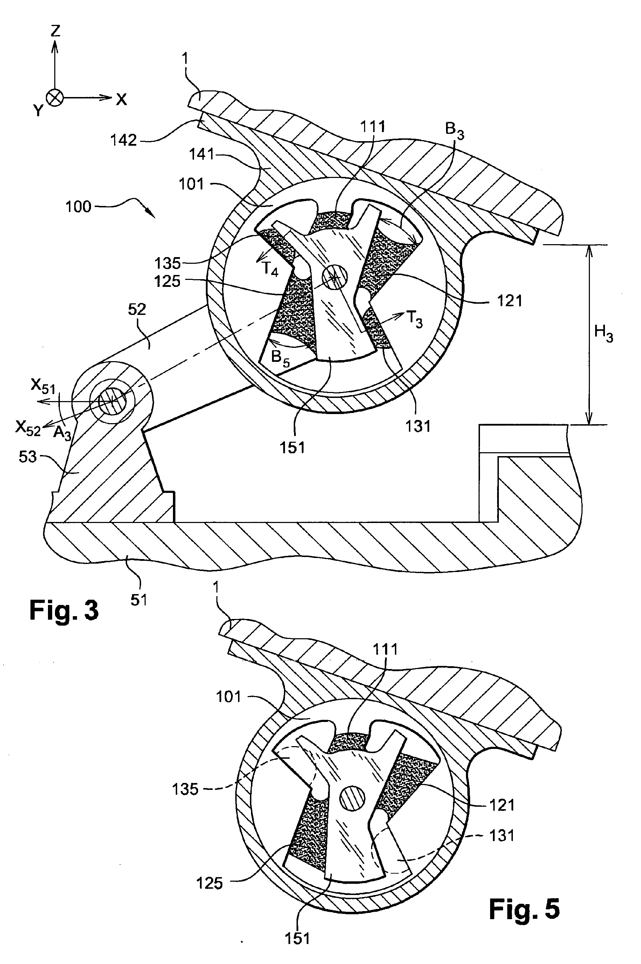

Figure 5 shows the cab suspension unit of figure 1 in an intermediate step during its manufacturing process. Previously, first and second elastic components 111, 121 and 125 have been moulded between the static part 101 and the rotating part 151, or have been secured to at least one of them, thusly resulting in an intermediate part without third elastic components 131 and 135. In this position shown in Figure 5, there is no stress on the first or second elastic components 111, 121 or 125. The resulting cab suspension unit 100 lies in a first mounting position, which is distinct from the median position of figure 2.

Third elastic components 131 and 135 are illustrated in dotted lines at their future positions, and it can be seen that they would interfere with rotating part when the second elastic components are "unloaded". Then, an intermediate step consists in securing the third elastic components 131 and 135 to the static part 101. This step requires that the rotating part be rotated to a second mounting position (not shown, but for example similar to that of figure 1) where the second components are compressed. Once the third components in place, the two parts can be released and they then occupy an unloaded position where both e the second and the third elastic components are stressed in compression, before even bien installed on the vehicle.

The operation of cab suspension unit 100 will now be described more accurately in view of a comparison between figures 1, 2 and 3. For cab suspension unit 100, figure 2 represents a median or "neutral" position, figure 1 a downside or "low" position and figure 3 an upside or "rebound" position. A counterclockwise rotation of lever 52 around its axis Y₅₂ and of rotating part 151 around its axis Y₁₅₁ leads from the position of figure 1 to the position of figure 3 via the position of figure 2.

Figure 2 corresponds to an intermediate position between the positions respectively illustrated on figures 1 and 3. Cab 1 is located, with respect to the reference surface of chassis 51, at a height H₂ which is comprised between the heights H₁ and H₃ of cab 1 respectively in the positions of figures 1 and 3. In the intermediate position of figure 2, axis X₅₂ of lever 52 forms a median angle A₂ with direction X₅₁ of chassis 51. This position is called "neutral", because the cab suspension unit 100 only transmits a static load corresponding to the weight of cab 1. Such a static load exists as long as the cab 1 is suspended over the chassis 51.

In the position of figure 2, first and second elastic components 111, 121 and 125 bear only compression stresses resulting from the static load. Besides, third elastic components 131 and 135 do not bear any stress in this "neutral" position. Indeed, third elastic components 131 and 135 are located at respective distances d₁₃₁ and d₁₃₅ from rotating part 151, so that they do not contact the rotating part 151. The third elastic components 131 and 135 lie at respective distances d₁₃₁ and d₁₃₅ from the rotating part 151, as long as cab 1 stands away from chassis 51 at a distance inferior to the predetermined distance H₃.

The position of figure 1 is called a "low" position, because figure 1 corresponds to a position where cab 1 is low, i.e. where cab 1 has moved downwards towards chassis 51, thus adding a dynamic load to the static load. Such a dynamic load occurs for instance when the chassis 51 moves suddenly up with respect to the cab, i.e. when a wheel of the vehicle hits a bump. In such a position, cab 1 is located at a height H₁ with respect to a reference surface of chassis 51. Besides, a longitudinal axis X₅₂ of lever 52 forms a small angle A₁ with a horizontal direction X₅₁, characterizing chassis 51. Angle A₁ approximately corresponds to -15°with respect to the "neutral" p osition of figure 2. In the position of figure 1, second elastic components 121 and 125 are stressed in compression, first elastic component 111 is stressed both in compression and in shearing, while third elastic components 131 and 135 are not submitted to any stress.

The position of figure 3 is called a "rebound" position, because cab 1 has rebounded on cab suspension unit 100. Figure 3 corresponds to a position where cab 1 is high, i.e. where cab 1 has travelled upwards and away from chassis 51, thus adding a dynamic load to the static load. Such a dynamic load occurs for instance when the chassis 51 moves suddenly down with respect to the cab, i.e. when a wheel of the vehicle drives in a hole of the road. The position illustrated by figure 3 occurs when the cab 1 travels beyond a predetermined distance away from the chassis 51, i.e. when the foot and the left upper arm of rotating part 151 respectively reach contact with the third elastic components 131 and 135.

In the position of figure 3, cab 1 is located at the height H₃ with respect to the reference surface of chassis 51. Besides, axis X₅₂ forms a large angle A₃ with direction X₅₁ of chassis 51. Angle A₃ approximately corresponds to +15° with respect to the "neutral" position of figure 2. Figure 3 illustrates a position where third elastic components 131 and 135 are mainly stressed in compression and transfer most of dynamic load induced by the vertical movements of the cab 1 relative to the chassis 51. Third elastic components 131 and 135 can hence dampen the rotating movement of the rotating part 151 when the latter turns counter clockwise from its position illustrated on figure 3.

Preferably, in this position of figure 3, second elastic components 121 and 125 are still slightly stressed in compression or not stressed. In an extreme position, the second components 121 and 125 can be slightly stressed in tension if they are secured to both the static 101 and rotating 151 parts. First elastic component 111 is stressed both in compression and in shearing. First elastic component 111 roughly functions as a pivot connection, sliding in the Y direction, between static and rotating parts 101 and 151.

When the rotating part 151 turns, with limited amplitude relative to the static part 101, the displacements of its upper arms and of its foot correspond to the vertical displacement of cab 1 in relation to the lever arms, i.e. by the length of lever 52 and by the respective radius of the upper arm and of the foot. These lever arms are selected depending upon the maximum vertical displacement of cab 1 and upon the allowable compression of first, second and third elastic components 111, 121, 125, 131 and 135.

Unlike the "neutral" position, the "low" position of figure 1 and the "rebound" position of figure 3 correspond to transfers of high loads L induced by the relative movement of cab 1 and chassis 51. On one hand, in the "low" position of figure 1, first elastic component 111 transfers the force F₁ corresponding to the static and dynamic loads combined, and second elastic components 121 and 125 transfer large dynamic forces T₁ and T₂ generating torque. On the other hand, in the "rebound" position of figure 3, first elastic component 111 still transfers the force F₁ corresponding to the static and dynamic loads combined, and second elastic components 121 and 125 transfer large forces T₃ and T₄ generating torque, the latter being oriented in opposite directions with respect to the torque generated by forces T₁ and T₂.

Besides, there is a non shown position of the cab suspension unit 100 where both the second and the third elastic components 121, 125, 131 and 135 are in a compressed state. Such a position represents the transition between the "rebound" position and a position where second elastic components 121 and 125 are compressed again.

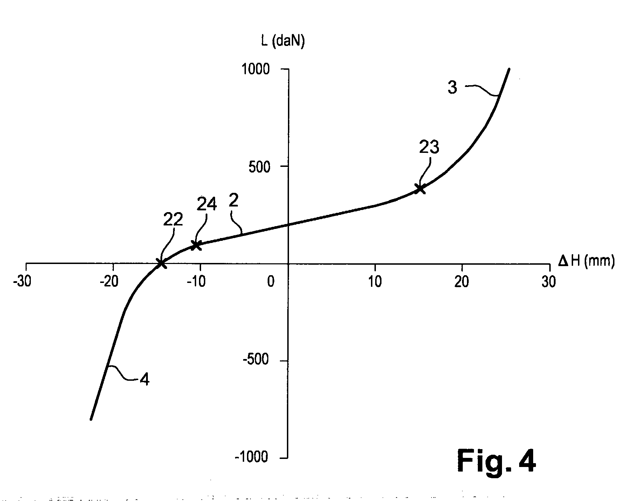

Figure 4 illustrates a chart of the load L induced by cab 1 on chassis 51 versus the displacement ΔH of cab 1 with respect to chassis 51. This displacement ΔH corresponds to the current height H minus "neutral" height H₂, i.e. ΔH = H₂ - H. The displacement ΔH of cab 1 is given by deducting the current height of cab 1 from its height where load L is only a static load. Furthermore, a dynamic load on cab suspension 100 results in increased or decreased forces T₁ and T₂ and/or T₃ and T₄, which generates reaction torques around axis Y₁₅₁. On the chart of figure 4, load L is expressed in decanewtons (daN) and displacement ΔH is expressed in millimeters (mm).

This curve has a central part 2 which is in the form of a straight line and with a weak slope since a large increase of the displacement ΔH, say 25 mm, corresponds to a small increase in the load L, say 300 daN. This central part 2 corresponds to a static load L with a small compression of second elastic components 121 and 125. Meanwhile; rotating part 151 slightly turns clockwise departing from the "neutral" position illustrated at figure 2. At displacement ΔH = 0, hence in the "neutral" position of figure 2, the static load L is worth about 200 daN, because the vehicle is herein equipped with four cab suspension units together bearing a cab weighing about 800 daN.

Hence, the central line 2 represents a behavior of the cab suspension unit 100 that is quite comfortable for passengers. To this aim, the dimensions and the elasticity modules of second elastic components 121 and 125 and of first elastic component 111 are selected to provide the cab suspension unit 100 with a relatively low stiffness for a large displacement around the "neutral" or median position. Besides, the elasticity modulus of first elastic component 111 is selected so that first elastic component 111 shows a relatively high stiffness in compression. This reduces the transmission of vertical forces to the second and third elastic components 121, 125, 131 and 135, thus avoiding them to be overstressed in shearing mode.

Further on the right of central line 2 extends a curved line 3 beyond a transition area 23. Right line 3 represents a high load L for the extreme displacements ΔH of cab 1 towards chassis 51. The slope of right line 3 becomes steeper and steeper as the displacement ΔH sharply increases. This corresponds to the "low" position of figure 1, where rotating part 151 turns clockwise thus highly compressing second elastic components 121 and 125. Although they are submitted to high compression, second elastic components 121 and 125 present a smaller deformation, which is due to an increase of their elasticity modules. This corresponds to a high stiffness of cab suspension unit 100.

Opposite the right line 3 and on the left of the center line 2, figure 4 shows a curved line 4, where rotating part 151 turns counterclockwise towards the "rebound" position of figure 3 and reaches contact with third elastic components 131 and 135. Beyond a transitional area 24, left line 4 becomes steeper and steeper as the displacement ΔH increases in absolute figures. Along this left line 4, third elastic components 131 and 135, working in compression, show high elasticity modules. This also corresponds to a high stiffness of cab suspension unit 100, with a high transfer of load L despite a small displacement ΔH.

The position of figure 1 corresponds to the transitional area 23 on the chart of figure 4, while the position of figure 3 corresponds to the transitional area 24 on the chart of figure 4.

Such a behavior of cab suspension unit 100 with a non linear stiffness permits not only to provide the cab passengers with comfortable conditions in most cases, but also to avoid the requirement of a very large displacement of cab 1. Indeed, high loads L, whether cab 1 is "low" or "rebounding", are transferred to chassis 51 with extreme displacements that are small and by means of high elasticity modules of the elastic components.

Moreover, first, second and third elastic components 111, 121, 125, 131 and 135 seldom work in tension and in shearing. Indeed, when these elastic components are made of elastomeric material, like rubber, they can withstand much more compression than tension. Thus, first, second and third elastic components 111, 121, 125, 131 and 135 can have a longer service life.

Furthermore, the design of the cab suspension unit according to the present invention makes it possible to select distinct stiffness coefficients for the downwards and upwards motions of the cab, i.e. when the cab moves towards the chassis or away from it.

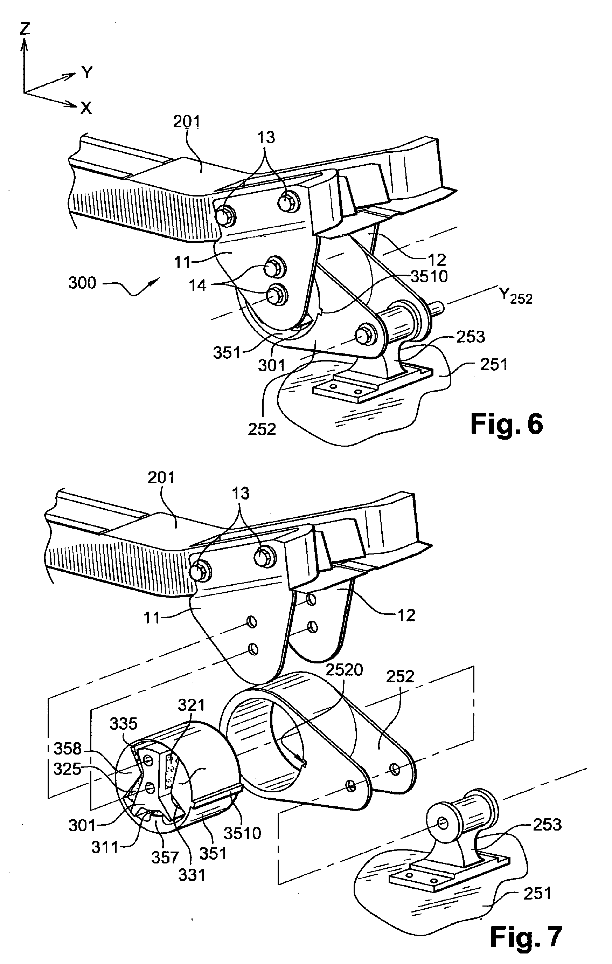

Figures 6 and 7 illustrate a cab suspension unit 300 according to another embodiment of the present invention. The essential parts of cab suspension unit 300 have structures that are quite similar to the structures of the corresponding parts of cab suspension unit 100 at figures 1 to 3. In most cases, the reference number of a part of cab suspension unit 300 can be directly derived, by adding 200 to it, from the reference number of the part of cab suspension unit 100 that has the corresponding structure.

One can thus define a cab 201, a chassis 251, a bracket 253 and a lever 252 with its transverse axis Y₂₅₂. Figures 6 and 7 have the same XYZ reference frames as figures 1 to 3, with horizontal plane XY. Cab suspension units 300 comprise a static part 351 and a rotating part 301. As can be seen more particularly on figure 7, a rotating part 351, which is external, has the same geometry or design as external static part 101 of cab suspension unit 100. In the same manner, a static part 351, which is internal, has the same geometry or design as internal rotating part 151 of cab suspension unit 100.

The static part 301 is connected to cab 201 by way of two flanges 11 and 12. Flanges 11 and 12 extend on each side of cab suspension unit 300 and are secured to cab 201 by bolts 13. Two bolts 14 fasten flanges 11 and 12 to static part 301. Therefore, static part 301 is said to be static with respect to cab 1.

Rotating part 351 can rotate with respect to static part 301 and to cab 201. Rotating part 351 has a key 3510 on its outer surface to engage a groove 2520 located on an inner cylindrical surface of a lever 252. Rotating part 351 is thus secured to lever 252, the latter being pivotally connected to bracket 253. Bracket 253 is attached to a partially shown chassis equivalent to chassis 251.

Another difference with the embodiment illustrated at figures 1 to 3 lies in the fact that rotating part 351 and static part 301 are positioned upside-down with respect to rotating part 151 and static part 101. For instance, as can be seen on figure 7, the foot of static part 301 is located upside whereas the arms of static part 301 are located downside.

Cab suspension unit 300 further comprises a first elastic component 311, two second elastic components 321 and 325 and two third elastic components 331 and 335. These elastic components have the same geometry and the same location as the corresponding elastic components of cab suspension unit 100. However, since rotating part 351 and static part 301 are turned upside-down, first elastic element 311 is located downside of rotating part 351. First elastic component is secured to a stud 357 similar to stud 107. One face of every second elastic component 321 and 325 is secured to static part 301, while another face is respectively secured to salient triangles 359 and 358 defined by rotating part 351. Third elastic components 331 and 335 are secured to rotating part 351, but not to static part 301.

Cab suspension units 100 and 300 generally operate in the same way. Hence, operation of cab suspension unit 300 is not further described herein.

Figure 8 illustrates a third embodiment of a cab suspension unit 400 according to the invention, which is very similar to cab suspension unit 100 of figures 1 to 3. The reference number of a part of cab suspension unit 400 directly derives, by adding 300, from the reference number of the corresponding part of cab suspension unit 100. One can thus define static part 401, rotating part 451, first elastic component 411, second elastic components 421 and 425 and third elastic components 431 and 435.

The parts listed above have the same structures and functions as the corresponding part of cab suspension unit 100. The sole difference between cab suspension unit 400 and cab suspension unit 100 lies in the fact that first and second elastic components 411, 421 and 425 comprise several alternating layers of elastomeric material, like rubber, and of metal, like steel. Every layer, whether elastomeric or metallic, extends generally parallel to the adhering faces of the respective elastic component 411, 421 or 425. Such a multilayered structure of elastic components 411, 421 and 425 mainly changes the ratio of the shear stiffness relative to the compression stiffness. More accurately, it permits to modify, according to the functional requirements, the stiffness along the Y axis.

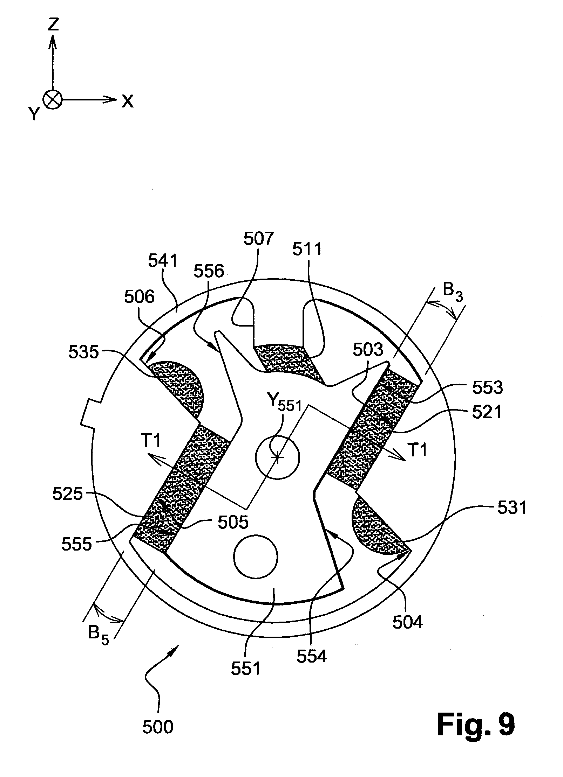

Figure 9 illustrates a fourth embodiment of a cab suspension unit 500 according to the invention, which is quite similar to cab suspension unit 100 of figures 1 to 3. The reference number of a part of cab suspension unit 500 directly derives, by adding 400, from the reference number of the corresponding part of cab suspension unit 100. One can thus define static part 501, rotating part 551, first elastic component 511, second elastic components 521 and 525 and third elastic components 531 and 535, stud 507, planar surfaces 503, 504, 505, 506 and 553, 554, 555 and 556.

The parts listed above have the same structures and functions as the corresponding part of cab suspension unit 100. The main structural difference between cab suspension unit 500 and cab suspension unit 100 lies in the fact that rotating part 551 has the general shape of an "X", with two relatively thin upper arms and a thick foot, whereas the rotating part 151 has the general shape of a "Y". The foot of rotating part 551 is thicker than the foot of rotating part 151.

In other words, opposite planar surfaces 553 and 555, one the one hand, and opposite auxiliary planar surfaces 554 and 556, on the other hand, are mutually parallel and lie at the same distance from axis Y₅₅₁. Planar surfaces 553 and 555, one the one hand, relative to axis Y₅₅₁ and auxiliary planar surfaces 554 and 556, on the other hand, are symmetric relative to axis Y₅₅₁. Auxiliary planar surfaces 554 and 556 are arranged to cooperate respectively with said third elastic components 531 and 535.

As a consequence, another difference between cab suspension unit 500 and cab suspension unit 100 lies in the fact that auxiliary planar surfaces 504 and 506 respectively extend along directions which lie at approximately 110° counterclockwise with reference to planar surfaces 503 and 505, instead of 130° cab suspension unit 100. As can be seen on figure 9, derived from a comparison between figures 1, 2 and 3, the respective angles B₃ and B₅ between planar surfaces 503-553 and 505-555 are approximately comprised between 0° and 40°, varying of course with the relative position of the static and rotating parts. Thus, angles B₃ and B₅ are inferior to 45°.

Such an "X" shape enhances the dampening or filtration efficiency of cab suspension unit 500, because it permits to transfer two forces T₁ which are identical and hence generate a pure torque around axis Y₅₅₁. This torque is called "pure", because it is perfectly centered on axis Y₅₅₁. Both forces T₁ are mutually parallel and orthoradial, i.e. orthogonal to a radial direction with reference to a circle centered on axis Y₅₅₁. Such a rotating part avoids any disturbing force.

On the same way, when rotating part 551 turns counterclockwise and reaches contact with third elastic components 131 and 135, it can transfer two forces which are identical and parallel, thus generating a pure torque around axis Y₅₅₁.

According to a non shown embodiment of a cab suspension unit according to the invention, third elastic components are attached only to the internal part, whether 151 or 301, but not to the external part, whether 101 or 351. In this embodiment, the internal part can be either the rotating part or the static part and, conversely, the external part can be either the static part or the rotating part.

According to a non shown embodiment of a vehicle according to the invention, two cab suspension units can be mounted under the rearward area of the cab, whereas the forward end of the cab is pivotally secured to the chassis, so that the cab may pivot about a transverse axis.

According to another non shown embodiment, the rotating and the static parts can be in direct contact, instead of being linked by a first elastomeric component. In such an embodiment, the respective contact surfaces of the rotating part and of the static part are generally cylindrical and they can slide one on the other. The first component is then constituted by a stud higher than stud 107, departing from the external part and contacting the internal part. In a further non shown embodiment, alike flanges 11 and 12, two lateral flanges are attached to the static part, in order to bear the central shaft so as to allow the rotating part to rotate with limited amplitude relative to the static part, thereby replacing the first elastic component shown in the first three embodiments.

## Claims

1. A cab suspension unit (100; 300; 400; 500), for a vehicle having a chassis (51; 251) supporting a cab (1; 201), comprising a rotating part (151; 351; 451; 551) and a static part (101; 301; 401; 501) with respect to said cab (1; 201), one of said rotating (151; 351; 451; 551) and static parts (101; 301; 401; 501) having means for connexion to said cab (1; 201) and the other one of said rotating (151; 351; 451; 551) and static parts (101; 301; 401; 501) having means for connexion to said chassis (51; 251), said rotating part (151; 351; 451; 551) being arranged to rotate around a generally horizontal axis (Y₁₅₁; Y₅₅₁) with respect to said static part (101; 301; 401; 501) due to the vertical movements of said cab (1; 201) relative to said chassis (51; 251), said static part (101; 301; 401; 501) being fixed relative to said cab (1;201);
**characterised in that** it further comprises:
- at least one first component (111; 311; 411; 511) arranged between said rotating part (151; 351; 451; 551) and said static part (101; 301; 401; 501), so as to transmit mainly vertical force (F₁) induced by the load (L) of said cab (1; 201);
- at least one second component (121, 126; 321, 325; 421, 425; 521, 525) having elastic properties and arranged between said rotating part (151; 351; 451; 551) and said static part (101; 301; 401; 501), so as to be mainly stressed in compression and to dampen the rotating movement of said rotating part (151; 351; 451; 551),
wherein it further comprises :
- at least one third component (131, 135; 331, 335; 431, 435; 531, 535) having elastic properties and arranged between said rotating part (151; 351; 451; 551) and said static part (101; 301; 401; 501), so as to be mainly stressed in compression and to dampen the rotating movement of said rotating part (151; 351; 451; 551) when said cab (1; 201) travels beyond a first predetermined distance (H₃) away from said chassis (51; 251).

2. A cab suspension unit (100; 300; 400; 500) according to claim 1, **characterized in that** said or every first component (111; 311; 411; 511) has elastic properties and **in that** said or every first component (111; 311; 411; 511) is attached to said rotating part (151; 351; 451; 551) and to said static part (101; 301; 401; 501).

3. A cab suspension unit (100; 300; 400; 500) according to any preceding claim, **characterized in that** it comprises two second elastic components (121, 125; 321, 325; 421, 425; 521, 525), said second elastic components (121, 125; 321, 325; 421, 425; 521, 525) being located and oriented generally symmetrically with respect to said horizontal axis (Y₁₅₁; Y₅₅₁).

4. A cab suspension unit (100; 300; 400; 500) according to any preceding claim, **characterized in that** it has two third elastic components (131, 135; 331, 335; 431, 435; 531, 535) located and oriented symmetrically with respect to said horizontal axis (Y₁₅₁; Y₅₅₁).

5. A cab suspension unit (100; 300; 400; 500) according to any preceding claim, **characterized in that** said second (121, 125; 321, 325; 421, 425; 521, 525) and third (131, 135; 331, 335; 431, 435; 531, 535) elastic components are distinct components.

6. A cab suspension unit (100; 300; 400; 500) according to any of preceding claims, **characterized in that** said second (121, 125; 321, 325; 421, 425; 521, 525) and third (131, 135; 331, 335; 431, 435; 531, 535) elastic components are selected so that the stiffness of said cab suspension unit (100; 300; 400; 500) is, on one hand, low for small displacements (H₂) of said cab (1; 201) with respect to said chassis (51; 251) and, on the other hand, high for large displacements (H₁; H₃) of said cab (1; 201) with respect to said chassis (51; 251).

7. A cab suspension unit (100; 300; 400; 500) according to any preceding claim, **characterized in that** one of said rotating (151; 351; 451; 551) and static (101; 301; 401; 501) parts defines an external part and **in that** the other one of said rotating (151; 351; 451; 551) and static (101; 301; 401; 501) parts defines an internal part, said external part generally enclosing said internal part.

8. A cab suspension unit (100; 400; 500) according to claim 7, **characterized in that** said rotating part (151; 451) and said static part (101; 401; 501) respectively have means for connexion to said chassis (51; 251) and to said cab (1; 201), and **in that** said rotating part (151; 451; 551) and said static part (101; 401; 501) respectively define the internal part and the external part.

9. A cab suspension unit (100; 400; 500) according to any preceding claim, **characterized in that** said or every first component (111; 411; 511) is located vertically above said horizontal axis (Y₁₅₁; Y₅₅₁).

10. A cab suspension unit (300) according to claim 1 to 8, **characterized in that** said or every first component (311) is located vertically under said horizontal axis (Y₁₅₁).

11. A cab suspension unit (100; 300; 400; 500) according to any preceding claim, **characterized in that** said or every second elastic component (121, 125; 321, 325; 421, 425; 521, 525) cooperates with said rotating part (151; 351; 451; 551) and with said static part (101; 301; 401; 501) along respective planar surfaces (103, 153, 105, 155; 503, 553, 505, 555), said planar surfaces (103, 153, 105, 155; 503, 553, 505, 555) being substantially parallel for at least one relative position in operation of said static part (101; 301; 401; 501) and of said rotating part (151; 351; 451; 551).

12. A cab suspension unit (500) according to claim 4, **characterized in that** said rotating part (551) has auxiliary planar surfaces (554, 556) arranged to cooperate with said third elastic components (531, 535), said auxiliary planar surfaces (554, 556) being generally parallel to each other.

13. A cab suspension unit (100; 300; 400; 500) according to any preceding claim, **characterized in that** said or every third elastic component (131, 135; 331, 335; 431, 435; 531, 535) is attached to only one of said rotating (151; 351; 451; 551) and static (101; 301; 401; 501) parts.

14. A cab suspension unit (100; 300; 400; 500) according to any preceding claim, **characterized in that** said second (121, 125; 321, 325; 421, 425; 521, 525) and third (131, 135; 331, 335; 431, 435; 531, 535) elastic components are made of elastomeric material, for example rubber.

15. A cab suspension unit (100; 300; 400; 500) according to any preceding claim, **characterized in that** one of said rotating part (151; 351; 451; 551) and static part (101; 301; 401; 501) is connected to said chassis (51; 251) by means of a lever (52), said lever (52) being articulated to said chassis (51; 251).

16. A vehicle having a chassis (51; 251) supporting a cab (1; 201), **characterized in that** it comprises at least two cab suspension units (100; 300; 400; 500) according to any preceding claim, said suspensions being respectively located on the right side and on the left side of said vehicle.

## Patentansprüche

1. Kabinenaufhängungseinheit (100; 300; 400; 500) für ein Fahrzeug, das ein Chassis (51; 251) aufweist, das eine Kabine (1; 201) trägt, mit einem bezüglich der Kabine (1; 201) rotierenden Teil (151; 351; 451; 551) und einem statischen Teil (101; 301; 401; 501), wobei eines des rotierenden (151; 351; 451; 551) und des statischen Teils (101; 301; 401; 501) eine Einrichtung zur Verbindung mit der Kabine (1; 201) und das andere des rotierenden (151; 351; 451; 551) und des statischen Teils (101; 301; 401; 501) eine Einrichtung zur Verbindung mit dem Chassis (51; 251) aufweist, wobei das rotierende Teil (151; 351; 451; 551) so angeordnet ist, dass es sich aufgrund der vertikalen Bewegungen der Kabine (1; 201) relativ zu dem Chassis (51; 251) um eine insgesamt horizontale Achse (Y₁₅₁; Y₅₅₁) bezüglich des statischen Teils (101; 301; 401; 501) dreht, wobei das statische Teil (101; 301; 401; 501) relativ zu der Kabine (1; 201) fixiert ist, **dadurch gekennzeichnet, dass** sie weiterhin umfasst:
- wenigstens eine erste Komponente (111; 311; 411; 511), die zwischen dem rotierenden Teil (151; 351; 451; 551) und dem statischen Teil (101; 301; 401; 501) angeordnet ist, um hauptsächlich vertikale Kraft (F₁) zu übertragen, die durch die Last (L) der Kabine (1; 201) induziert ist,
- wenigstens eine zweite Komponente (121, 125; 321, 325; 421, 425; 521, 525), die elastische Eigenschaften aufweist und zwischen dem rotierenden Teil (151; 351; 451; 551) und dem statischen Teil (101; 301; 401; 501) angeordnet ist, um hauptsächlich druckbelastet zu werden und die Drehbewegung des rotierenden Teils (151; 351; 451; 551) zu dämpfen,
wobei sie weiterhin umfasst:
- wenigstens eine dritte Komponente (131, 135; 331, 335; 431, 435; 531, 535), die elastische Eigenschaften aufweist und zwischen dem rotierenden Teil (151; 351; 451; 551) und dem statischen Teil (101; 301; 401; 501) angeordnet ist, um hauptsächlich druckbelastet zu werden und die Drehbewegung des rotierenden Teils (151; 351; 451; 551) zu dämpfen, wenn die Kabine (1, 201) sich über einen ersten vorherbestimmten Abstand (H₃) hinaus von dem Chassis (51; 251) weg bewegt.

2. Kabinenaufhängungseinheit (100; 300; 400; 500) nach Anspruch 1, **dadurch gekennzeichnet, dass** die oder jede erste Komponente (111; 311; 411; 511) elastische Eigenschaften aufweist und dass die oder jede erste Komponente (111; 311; 411; 511) an dem rotierenden Teil (151; 351; 451; 551) und an dem statischen Teil (101; 301; 401; 501) befestigt ist.

3. Kabinenaufhängungseinheit (100; 300; 400; 500) nach irgendeinem vorhergehenden Anspruch, **dadurch gekennzeichnet, dass** sie zwei zweite elastische Komponenten (121, 125; 321, 325; 421, 425; 521, 525) umfasst, wobei die zweiten elastischen Komponenten (121, 125; 321, 325; 421, 425; 521, 525) bezüglich der horizontalen Achse (Y₁₅₁; Y₅₅₁) insgesamt symmetrisch angeordnet und ausgerichtet sind.

4. Kabinenaufhängungseinheit (100; 300; 400; 500) nach irgendeinem vorhergehenden Anspruch, **dadurch gekennzeichnet, dass** sie zwei dritte elastische Komponenten (131, 135; 331, 335; 431, 435; 531, 535) aufweist, die bezüglich der horizontalen Achse (Y₁₅₁; Y₅₅₁) symmetrisch angeordnet und ausgerichtet sind.

5. Kabinenaufhängungseinheit (100; 300; 400; 500) nach irgendeinem vorhergehenden Anspruch, **dadurch gekennzeichnet, dass** die zweiten (121, 125; 321, 325; 421, 425; 521, 525) und dritten (131, 135; 331, 335; 431, 435; 531, 535) elastischen Komponenten unterschiedliche Komponenten sind.

6. Kabinenaufhängungseinheit (100; 300; 400; 500) nach irgendeinem der vorhergehenden Ansprüche, **dadurch gekennzeichnet, dass** die zweiten (121, 125; 321, 325; 421, 425; 521, 525) und dritten (131, 135; 331, 335; 431, 435; 531, 535) elastischen Komponenten so ausgewählt sind, dass die Steifigkeit der Kabinenaufhängungseinheit (100; 300; 400; 500) einerseits für kleine Verschiebungen (H₂) der Kabine (1; 201) bezüglich des Chassis (51; 251) niedrig ist und andererseits für große Verschiebungen (H₁; H₃) der Kabine (1; 201) bezüglich des Chassis (51; 251) hoch ist.

7. Kabinenaufhängungseinheit (100; 300; 400; 500) nach irgendeinem vorhergehenden Anspruch, **dadurch gekennzeichnet, dass** eines des rotierenden (151; 351; 451; 551) und des statischen (101; 301; 401; 501) Teils ein äußeres Teil bildet und dass das andere des rotierenden (151; 351; 451; 551) und des statischen (101; 301; 401; 501) Teils ein inneres Teil bildet, wobei das äußere Teil das innere Teil insgesamt umschließt.

8. Kabinenaufhängungseinheit (100; 400; 500) nach Anspruch 7, **dadurch gekennzeichnet, dass** das rotierende Teil (151; 451) und das statische Teil (101; 401; 501) jeweils eine Einrichtung zur Verbindung mit dem Chassis (51; 251) und mit der Kabine (1; 201) aufweisen und dass das rotierende Teil (151; 451; 551) und das statische Teil (101; 401; 501) das innere Teil bzw. das äußere Teil bilden.

9. Kabinenaufhängungseinheit (100; 400; 500) nach irgendeinem vorhergehenden Anspruch, **dadurch gekennzeichnet, dass** die oder jede erste Komponente (111; 411; 511) vertikal über der horizontalen Achse (Y₁₅₁; Y₅₅₁) angeordnet ist.

10. Kabinenaufhängungseinheit (300) nach Anspruch 1 bis 8, **dadurch gekennzeichnet, dass** die oder jede erste Komponente (311) vertikal unter der horizontalen Achse (Y₁₅₁) angeordnet ist.

11. Kabinenaufhängungseinheit (100; 300; 400; 500) nach irgendeinem vorhergehenden Anspruch, **dadurch gekennzeichnet, dass** die oder jede zweite elastische Komponente (121, 125; 321, 325; 421, 425; 521, 525) mit dem rotierenden Teil (151; 351; 451; 551) und mit dem statischen Teil (101; 301; 401; 501) entlang jeweiliger ebener Flächen (103, 153, 105, 155; 503, 553, 505, 555) zusammenwirkt, wobei die ebenen Flächen (103, 153, 105, 155; 503, 553, 505, 555) für wenigstens eine relative Position beim Betrieb des statischen Teils (101; 301; 401; 501) und des rotierenden Teils (151; 351; 451; 551) im Wesentlichen parallel sind.

12. Kabinenaufhängungseinheit (500) nach Anspruch 4, **dadurch gekennzeichnet, dass** das rotierende Teil (551) ebene Hilfsflächen (554, 556) aufweist, die so angeordnet sind, dass sie mit den dritten elastischen Komponenten (531, 535) zusammenwirken, wobei die ebenen Hilfsflächen (554, 556) insgesamt parallel zueinander sind.

13. Kabinenaufhängungseinheit (100; 300; 400; 500) nach irgendeinem vorhergehenden Anspruch, **dadurch gekennzeichnet, dass** die oder jede dritte elastische Komponente (131, 135; 331, 335; 431, 435; 531, 535) an nur einem von dem rotierenden (151; 351; 451; 551) und dem statischen (101; 301; 401; 501) Teil befestigt ist.

14. Kabinenaufhängungseinheit (100; 300; 400; 500) nach irgendeinem vorhergehenden Anspruch, **dadurch gekennzeichnet, dass** die zweiten (121, 125; 321, 325; 421, 425; 521, 525) und dritten (131, 135; 331, 335; 431, 435; 531, 535) elastischen Komponenten aus Elastomermaterial, beispielsweise Kautschuk, bestehen.

15. Kabinenaufhängungseinheit (100; 300; 400; 500) nach irgendeinem vorhergehenden Anspruch, **dadurch gekennzeichnet, dass** eines des rotierenden Teils (151; 351; 451; 551) und des statischen Teils (101; 301; 401; 501) mit dem Chassis (51; 251) mittels eines Hebels (52) verbunden ist, wobei der Hebel (52) an dem Chassis (51; 251) angelenkt ist.

16. Fahrzeug mit einem Chassis (51; 251), das eine Kabine (1; 201) trägt, **dadurch gekennzeichnet, dass** es wenigstens zwei Kabinenaufhängungseinheiten (100; 300; 400; 500) gemäß irgendeinem vorhergehenden Anspruch umfasst, wobei die Aufhängungen jeweils auf der rechten Seite und auf der linken Seite des Fahrzeugs angeordnet sind.

## Revendications

1. Unité de suspension de cabine (100 ; 300 ; 400 ; 500), pour un véhicule ayant un châssis (51 ; 251) supportant une cabine (1 ; 201), comprenant une partie rotative (151 ; 351 ; 451 ; 551) et une partie statique (101 ; 301 ; 401 ; 501) par rapport à ladite cabine (1 ; 201), l'une desdites parties rotative (151 ; 351 ; 451 ; 551) et statique (101 ; 301 ; 401 ; 501) ayant des moyens de liaison à ladite cabine (1 ; 201) et l'autre desdites parties rotative (151 ; 351 ; 451 ; 551) et statique (101 ; 301 ; 401 ; 501) ayant des moyens de liaison audit châssis (51 ; 251), ladite partie rotative (151 ; 351 ; 451 ; 551) étant agencée pour tourner autour d'un axe généralement horizontal (Y₁₅₁ ; Y₅₅₁) par rapport à ladite partie statique (101 ; 301 ; 401 ; 501) en raison des mouvements verticaux de ladite cabine (1 ; 201) par rapport audit châssis (51 ; 251), ladite partie statique (101 ; 301 ; 401 ; 501) étant fixe par rapport à ladite cabine (1 ; 201) ; **caractérisée en ce qu'**elle comprend en outre :
- au moins un premier composant (111 ; 311 ; 411 ; 511) agencé entre ladite partie rotative (151 ; 351 ; 451 ; 551) et ladite partie statique (101 ; 301 ; 401 ; 501), de manière à transmettre une force principalement verticale (F1) provoquée par la charge (L) de ladite cabine (1 ; 201) ;
- au moins un deuxième composant (121, 126 ; 321, 325 ; 421, 425 ; 521, 525) ayant des propriétés élastiques et agencé entre ladite partie rotative (151 ; 351 ; 451 ; 551) et ladite partie statique (101 ; 301 ; 401 ; 501), de manière à être sollicité principalement en compression et à amortir le mouvement rotatif de ladite partie rotative (151 ; 351 ; 451 ; 551),
l'unité de suspension de cabine comprenant en outre :
- au moins un troisième composant (131, 135 ; 331, 335 ; 431, 435 ; 531, 535) ayant des propriétés élastiques et agencé entre ladite partie rotative (151 ; 351 ; 451 ; 551) et ladite partie statique (101 ; 301 ; 401 ; 501), de manière à être sollicité principalement en compression et à amortir le mouvement rotatif de ladite partie rotative (151 ; 351 ; 451 ; 551) lorsque ladite cabine (1 ; 201) se déplace au-delà d'une première distance prédéfinie (H₃) à l'écart dudit châssis (51 ; 251).

2. Unité de suspension de cabine (100 ; 300 ; 400 ; 500) selon la revendication 1, **caractérisée en ce que** ledit ou chaque premier composant (111 ; 311 ; 411 ; 511) a des propriétés élastiques et **en ce que** ledit ou chaque premier composant (111 ; 311 ; 411 ; 511) est fixé à ladite partie rotative (151 ; 351 ; 451 ; 551) et à ladite partie statique (101 ; 301 ; 401 ; 501).

3. Unité de suspension de cabine (100 ; 300 ; 400 ; 500) selon l'une quelconque des revendications précédentes, **caractérisée en ce qu'**elle comprend deux deuxièmes composants élastiques (121, 125 ; 321, 325 ; 421, 425 ; 521, 525), lesdits deuxièmes composants élastiques (121, 125 ; 321, 325 ; 421, 425 ; 521, 525) étant situés et orientés généralement de manière symétrique par rapport audit axe horizontal (Y₁₅₁ ; Y₅₅₁).

4. Unité de suspension de cabine (100 ; 300 ; 400 ; 500) selon l'une quelconque des revendications précédentes, **caractérisée en ce qu'**elle a deux troisièmes composants élastiques (131, 135 ; 331, 335 ; 431, 435 ; 531, 535) situés et orientés de manière symétrique par rapport audit axe horizontal (Y₁₅₁ ; Y₅₅₁).

5. Unité de suspension de cabine (100 ; 300 ; 400 ; 500) selon l'une quelconque des revendications précédentes, **caractérisée en ce que** lesdits deuxièmes (121, 125 ; 321, 325 ; 421, 425 ; 521, 525) et troisièmes (131, 135 ; 331, 335 ; 431, 435 ; 531, 535) composants élastiques sont des composants distincts.

6. Unité de suspension de cabine (100 ; 300 ; 400 ; 500) selon l'une quelconque des revendications précédentes, **caractérisée en ce que** lesdits deuxièmes (121, 125 ; 321, 325 ; 421, 425 ; 521, 525) et troisièmes (131, 135 ; 331, 335 ; 431, 435 ; 531, 535) composants élastiques sont sélectionnés de telle sorte que la rigidité de ladite unité de suspension de cabine (100 ; 300 ; 400 ; 500) soit, d'une part, faible pour des petits déplacements (H₂) de ladite cabine (1 ; 201) par rapport audit châssis (51 ; 251) et, d'autre part, élevée pour des grands déplacements (H₁ ; H₃) de ladite cabine (1 ; 201) par rapport audit châssis (51 ; 251).

7. Unité de suspension de cabine (100 ; 300 ; 400 ; 500) selon l'une quelconque des revendications précédentes, **caractérisée en ce que** l'une desdites parties rotative (151 ; 351 ; 451 ; 551) et statique (101 ; 301 ; 401 ; 501) définit une partie externe et **en ce que** l'autre desdites parties rotative (151 ; 351 ; 451 ; 551) et statique (101 ; 301 ; 401 ; 501) définit une partie interne, ladite partie externe renfermant généralement ladite partie interne.

8. Unité de suspension de cabine (100 ; 400 ; 500) selon la revendication 7, **caractérisée en ce que** ladite partie rotative (151 ; 451) et ladite partie statique (101 ; 401 ; 501) ont respectivement des moyens de liaison audit châssis (51 ; 251) et à ladite cabine (1 ; 201), et **en ce que** ladite partie rotative (151 ; 451 ; 551) et ladite partie statique (101 ; 401 ; 501) définissent respectivement la partie interne et la partie externe.

9. Unité de suspension de cabine (100 ; 400 ; 500) selon l'une quelconque des revendications précédentes, **caractérisée en ce que** ledit ou chaque premier composant (111 ; 411 ; 511) est situé verticalement au-dessus dudit axe horizontal (Y₁₅₁ ; Y₅₅₁).

10. Unité de suspension de cabine (300) selon les revendications 1 à 8, **caractérisée en ce que** ledit ou chaque premier composant (311) est situé verticalement en dessous dudit axe horizontal (Y₁₅₁).

11. Unité de suspension de cabine (100 ; 300 ; 400 ; 500) selon l'une quelconque des revendications précédentes, **caractérisée en ce que** ledit ou chaque deuxième composant élastique (121, 125 ; 321, 325 ; 421, 425 ; 521, 525) coopère avec ladite partie rotative (151 ; 351 ; 451 ; 551) et avec ladite partie statique (101 ; 301 ; 401 ; 501) le long de surfaces planes (103, 153, 105, 155 ; 503, 553, 505, 555) respectives, lesdites surfaces planes (103, 153,105, 155 ; 503, 553, 505, 555) étant sensiblement parallèles pour au moins une position relative lors du fonctionnement de ladite partie statique (101 ; 301 ; 401 ; 501) et de ladite partie rotative (151 ; 351 ; 451 ; 551).

12. Unité de suspension de cabine (500) selon la revendication 4, **caractérisée en ce que** ladite partie rotative (551) a des surfaces planes auxiliaires (554, 556) agencées pour coopérer avec lesdits troisièmes composants élastiques (531, 535), lesdites surfaces planes auxiliaires (554, 556) étant généralement parallèles l'une à l'autre.

13. Unité de suspension de cabine (100 ; 300 ; 400 ; 500) selon l'une quelconque des revendications précédentes, **caractérisée en ce que** ledit ou chaque troisième composant élastique (131, 135 ; 331, 335 ; 431, 435 ; 531, 535) est fixé à seulement l'une desdites parties rotative (151 ; 351 ; 451 ; 551) et statique (101 ; 301 ; 401 ; 501).

14. Unité de suspension de cabine (100 ; 300 ; 400 ; 500) selon l'une quelconque des revendications précédentes, **caractérisée en ce que** lesdits deuxièmes (121, 125 ; 321, 325 ; 421, 425 ; 521, 525) et troisièmes (131, 135 ; 331, 335 ; 431, 435 ; 531, 535) composants élastiques sont constitués de matériau élastomère, par exemple de caoutchouc.

15. Unité de suspension de cabine (100 ; 300 ; 400 ; 500) selon l'une quelconque des revendications précédentes, **caractérisée en ce que** l'une desdites partie rotative (151 ; 351 ; 451 ; 551) et partie statique (101 ; 301 ; 401 ; 501) est reliée audit châssis (51 ; 251) au moyen d'un levier (52), ledit levier (52) étant articulé sur ledit châssis (51 ; 251).

16. Véhicule ayant un châssis (51 ; 251) supportant une cabine (1 ; 201), **caractérisé en ce qu'**il comprend au moins deux unités de suspension de cabine (100 ; 300 ; 400 ; 500) selon l'une quelconque des revendications précédentes, lesdites suspensions étant situées respectivement du côté droit et du côté gauche dudit véhicule.
